# EUROPÄISCHE PATENTANMELDUNG

(11) **EP 1 045 244 A1**
(43) Veröffentlichungstag der Anmeldung: **18.10.2000**
(21) Anmeldenummer: 00250121.1
(22) Anmeldetag: 12.04.2000
(51) Int. Cl.: G01N 27/30

(54) **Planare offene Referenzelektrode zur Anwendung in voltammetrischen Messketten**

(30) Priorität: 13.04.1999 DE 19917830
(71) Anmelder: Senslab Gesellschaft zur Entwicklung und Herstellung Bioelektrochemischer Sensoren mbH, 04318 Leipzig (DE)
(72) Erfinder: Gründig, Bernd, 04318 Leipzig (DE); Kopinke, Holm, 04351 Leipzig (DE); Wollermann, Sybille, 04564 Böhlen (DE)
(74) Vertreter: Ziebig, Marlene, Dr. Dipl.-Chem.

(57) **Zusammenfassung**

Die Erfindung betrifft Referenzelektroden für die Nutzung in voltammetrischen Meßketten sowohl zur oxidativen als auch zur reduktiven Detektion von Analyten, die gegenüber dem Meßmedium offen sind. Für die erfindungsgemäßen Referenzelektroden zur oxidativen Detektion wird als potentialbestimmendes Elektrodenmaterial ein metallhaltiges Phthalocyanin oder Metallo-Porphyrin eingesetzt. Für die erfindungsgemäßen Referenzelektroden zur reduktiven Detektion wird als potentialbestimmendes Elektrodenmaterial ein Metall der vierten Periode, vorzugsweise Kupfer, und ein Salz dieses Metalles eingesetzt. Das potentialbestimmende Elektrodenmaterial ist als Schicht oder als Bestandteil einer Schicht auf einen planaren Träger aufgebracht. Die erfindungsgemäßen offenen Referenzelektroden sind besonders geeignet für planar strukturierte voltammetrische Chemo- oder Biosensoren.

## Beschreibung

Die Erfindung betrifft Referenzelektroden für die Nutzung in voltammetrischen Meßketten sowohl zur oxidativen als auch zur reduktiven Detektion von Analyten, die gegenüber dem Meßmedium offen sind. Für die erfindungsgemäßen Referenzelektroden zur oxidativen Detektion wird als potentialbestimmendes Elektrodenmaterial ein metallhaltiges Phthalocyanin oder Metallo-Porphyrin eingesetzt. Für die erfindungsgemäßen Referenzelektroden zur reduktiven Detektion wird als potentialbestimmendes Elektrodenmaterial ein Metall der vierten Periode, vorzugsweise Kupfer, und ein Salz dieses Metalles eingesetzt. Das potentialbestimmende Elektrodenmaterial ist als Schicht oder als Bestandteil einer Schicht auf einen planaren Träger aufgebracht. Die erfindungsgemäßen offenen Referenzelektroden sind besonders geeignet für planar strukturierte voltammetrische Chemo- oder Biosensoren.

Mit der Nutzung von Massenfertigungstechnologien für voltammetrische Chemo- und Biosensoren, wie sie aus der Dünn- und Dickschichttechnologie aus der Mikroelektronik bekannt sind, treten Probleme bei der Übertragung, insbesondere der konventionellen Referenzelektrode, auf planare Strukturen auf.

Für die voltammetrische Detektion von Analytkonzentrationen in Lösungen wird gewöhnlich eine Meßzelle bestehend aus einer Meß- bzw. Arbeitselektrode und einer Bezugs- bzw. Referenzelektrode oder eine potentiostatisch arbeitende Meßzelle bestehend aus Arbeitselektrode, Referenzelektrode und einer Hilfs- bzw. Gegenelektrode, verwendet, wobei die Elektroden in die Meßlösung eintauchen. Zur Sicherung eines konstanten Bezugs- bzw. Referenzpotentials, daß bei allen voltammetrischen Detektionsarten zur Einstellung eines definierten Polarisationspotentials der Arbeitselektrode erforderlich ist, werden gegenüber dem Meßmedium geschlossene Referenzelektroden verwendet. Ein typisches Beispiel eines voltammetrischen Sensors stellt die amperometrische Clark-Typ- Sauerstoffmeßzelle dar, die aus einer polarisierbaren Arbeitselektrode und einer nichtpolarisierbaren Bezugselektrode besteht. Liegt eine geeignete Polarisationsspannung zwischen beiden Elektroden an, wird an der Arbeitselektrode Sauerstoff elektrochemisch reduziert, so daß ein analytproportionaler Depolarisationsstrom zwischen beiden Elektroden im Außenkreis generiert wird. Speziell bei stromdurchflossenen Bezugselektroden ist auf eine ausreichend große Oberfläche, die ein Vielfaches der Arbeitselektrodenoberfläche betragen muß, zu achten, um ein konstantes Bezugspotential aufrecht zu erhalten. Alternativ wird deshalb das sogenannte Potentiostatenprinzip angewandt, bei dem durch eine geeignete elektronische Regelung und die Nutzung einer zusätzlichen Hilfselektrode (Gegenelektrode) die Referenzelektrode praktisch nicht strombelastet wird.
Gemeinsam ist allen klassischen Bezugselektroden für Anwendungen in wäßrigen Medien, daß sie als Elektroden der zweiten Art aus einem Metall (z.B. Quecksilber oder Silber), einer schwerlöslichen Verbindung des Metalls und einer das Anion der Metallverbindung enthaltenden Phase bestehen. Das potentialbestimmende Referenzelektrodenmaterial wird demzufolge mit einer definierten Anionenkonzentration der Metallverbindung umgeben und steht mit der Arbeitselektrode über eine ionisch leitende Salzbrücke, an deren Ende sich ein Diaphragma befindet und die auch als Stromschlüssel bezeichnet wird, in Verbindung.

Die Salzbrücke, die in der Regel mit Chloridkonzentrationen zwischen 1 M und 3 M befüllt ist, und das Diaphragma, das den ionischen Kontakt zur Messlösung herstellt, ohne dass eine Vermischung zwischen Elektrolyt der Salzbrücke eintreten kann, sichern ein konstantes Verhältnis von Metall/Metallsalz- und Anionenkonzentration des Metallsalzes und damit ein konstantes Bezugspotential.

Die Übertragung dieses geschlossenen Referenzelektrodensystems auf planare Strukturen ist nur mit großem Aufwand möglich und steht einer kostengünstigen Massenfertigung entgegen. Deshalb wird bei planar strukturierten voltammetrischen Meßketten, insbesondere zur kostengünstigen Herstellung voltammetrischer Chemo- und Biosensoren auf der Grundlage der Dünn- und Dickschichttechnologie häufig mit offenen Referenzelektroden gearbeitet, d.h., daß die Referenzelektrodenoberfläche direkt dem Meßmedium ausgesetzt wird.

Als Metall/Metallsalz werden vorzugsweise Silber/Silberhalogenide als Referenzelektrodensystem verwendet (EP 0304 933, DE 3309 251, US 5509410). Für die Aufrechterhaltung des Gleichgewichtspotentials einer Silber-Bezugselektrode ist eine annähernd konstante Silberionenkonzentration erforderlich, deshalb werden schwer wasserlösliche Silbersalze wie Silberchlorid genutzt. Die Silberionenkonzentration in wäßrigen Medien ist aufgrund des Löslichkeitsproduktes wesentlich von der Chloridionenkonzentration abhängig. Wird nun das Silber/Silberchloridsystem ohne Salzbrücke verwendet, d.h. direkt dem Messmedium ausgesetzt, so treten in der Regel eine Reihe von Störungen auf, insbesondere wenn in undefinierten Medien, wie sie Realproben darstellen, zu messen ist. Beispielsweise ändert sich in bewegten Medien in Abhängigkeit von der Strömungsgeschwindigkeit die steady state Ionenkonzentration an der Metall/Metallsalzgrenzfläche, so dass eine kurzzeitige Störung des Gleichgewichtspotentials und damit eine Potentialdrift eintritt. Darüber hinaus befinden sich Anionen in unbekannter Zusammensetzung und undefinierter Konzentration im Meßmedium, die ihrerseits Silbersalze bilden und aufgrund ihrer Löslichkeitsprodukte das Bezugspotential dominieren können. Zumindest können sie aber ein Mischpotential verursachen, das zu einer mehr oder weniger großen Potentialdrift und unter Umständen zu hohen Übergangswiderständen führt. Das Bezugspotential kann damit also wesentlich von der Zusammensetzung der Ionen und ihrer Konzentration im Meßmedium beeinflußt werden. Darüber hinaus wird das offene Referenzelektrodensystem von adsorbierenden Substanzen, Metallkomplexbildnern oder elektroaktiven Stoffen des Meßmediums und schließlich von den Diffusions- bzw. Konvektionsverhältnissen an der Elektrodenoberfläche wie oben beschrieben beeinflußt. Diese Situation ist weitgehend dadurch kompensierbar, indem die Probe mit einer definierten Elektrolytlösung verdünnt wird und konstante Strömungsverhältnisse eingehalten werden.

Unter bestimmten Bedingungen jedoch, wie sie insbesondere bei amperometrischen Biosensoren anzutreffen sind, bei denen die Biokomponente für eine stabile und sensitive Indikationsreaktion bestimmte Puffersubstanzen bzw. -ionen erfordert, kann es zu erheblichen Verschiebungen des Bezugspotentials kommen. Beispielsweise führt die Verwendung von Phosphatpuffer an einer offenen Silber/Silberchlorid- Referenzelektrode trotz der Anwesenheit von Chloridionen zur Bildung von Silberphosphat auf der Silberelektrode, was eine Verschiebung des Bezugselektrodenpotentials um ca. 150 mv in negative Richtung zur Folge hat. Im Vergleich zur geschlossenen Silber/Silberchlorid-Referenzelektrode ist also bei einer reduktiven Indikation eines oxidiert vorliegenden Analyten an der Arbeitselektrode um eine um 150 mV negativere Polarisationsspannung an die Arbeitselektrode anzulegen, was letztlich auch eine höhere Interferenzanfälligkeit der Meßkette mit offenem Referenzsystem mit sich bringt.

Ein anderer Aspekt, der für die oxidative Indikation beispielsweise des bei Oxidase-katalysierten Reaktionen entstehenden Wasserstoffperoxids generell von Bedeutung ist, betrifft die vergleichsweise hohe Polarisationsspannung, die bei einer konventionellen Meßkettenanordnung, bestehend aus einer Platinarbeitselektrode und einer Silber/Silberchlorid-Referenzelektrode, erforderlich ist. Bei Verwendung der offenen Meßkette in Phosphatpuffer bedeutet dies zwar eine Verminderung der erforderlichen Polarisationsspannung, dennoch bringt die anzulegende Polarisationsspannung von immerhin noch +450 mV bis + 500 mV erhebliche Interferenzstromeinflußmöglichkeiten mit sich. Darüber hinaus muß bei quasikontinuierlicher Anströmung einer solchen offenen Meßkette beim Übergang zwischen ruhendem und strömendem Medium aufgrund der Änderung der Ionenekonzentration bzw. der damit verbundenen Änderung des Gleichgewichtspotentials zwischen dem Metall und dem Metallsalz mit einem zeitlich langsam ablaufenden Einschwingverhalten der Meßkette gerechnet werden, die im ungünstigsten Fall die Meßwertbildung überlagert.

Insbesondere für miniaturisierte potentiometrische Sensoranordnungen wurde versucht, die Verhältnisse des konventionellen Bezugselektrodenaufbaus zu adaptieren, in dem polymere Materialien bzw. Diaphragmen als Diffusionsbarriereschichten, die das Metallsalzanion enthalten, unmittelbar auf das Referenzelektrodenmaterial schichtweise aufgetragen (EP 0247 535, DE 195 33 059, DE 195 34 925) oder entsprechende Bezugselektrolyt-enthaltende Reservoirs vorgesehen werden (Lambrechts, M., Sansen, W: Biosensors: Microelectrochemical devices, Institute of Physics Publishing, Bristol Philadelphia and New York, 1992). In ähnlicher Bauweise sind planare Bezugselektroden für amperometrische Sensoren bekannt (DE 42 41 206, US 4980043). Beiden Lösungsansätzen ist gemeinsam, daß die Schichten, Diffusionsbarrieren oder miniaturisierte Reservoirs nur eine begrenzte Rückhaltung des Bezugselektrolyten sichern und bei längerfristiger Betriebsdauer ein Elektrolytaustritt in das Meßmedium bzw. die Diffusion der Meßlösung zum Referenzsystem nicht verhindert werden kann.

Die Verwendung von Perchlorat als potentialbestimmendes Ion in Kombination mit einer perchloratsensitiven Membran zwischen dem Bezugselektrolytreservoir und dem Meßmedium sieht die Patentschrift DE 4302322 vor. Durch die Verwendung beispielsweise von Kaliumperchlorat, das im Reservoir in fester Form eingebracht wurde und eine wesentlich geringere Wasserlöslichkeit als die Bezugselektrolyten der Elektroden zweiter Art aufweist, wird in Kombination mit der perchloratsensitiven Membran eine wesentlich verbesserte Langzeitstabilität erreicht. Dieses Referenzsystem ist auch für potentiostatisch betriebene voltammetrische Sensoren nutzbar, erfordert aber wie alle Reservoirvarianten eine dreidimensionale Sensorstrukturierung.

Eine weitere, vergleichsweise aufwendige Lösung (DE4302323) sieht innerhalb des Bezugselektrolytraumes neben der Verwendung einer Redox-Referenzelektrode eine sogenannte Schutzelektrode vor, die räumlich zwischen Diaphragma und Referenzelektrode liegt. Zwischen beiden Elektroden wird das Potential gemessen. Kommt es aufgrund eindiffundierender elektroaktiver Substanzen an der Schutzelektrode zu einer Potentialdifferenz gegenüber der Referenzelektrode, wird analog dem Potentiostatenprinzip über eine zusätzliche Gegenelektrode ein Strom generiert, der die Störsubstanzen reduziert oder oxidiert bis wieder Potentialgleichheit zwischen Schutz- und Referenzelektrode vorliegt. Bei amperometrischen Enzymsensoren wurden alternative Referenzelektrodenmaterialien wie Silber-Palladiummischungen (US 5820551), Edelstahllegierungen (US 5736029) und Graphit (EP 0776675, US 5916156) in ZweiElektrodensystemen als Pseudoreferenzelektroden verwendet.

Für Drei-Elektrodenanordnungen auf 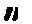 offenen" planaren Sensorstrukturen, die im sogenannten Potentiostatenbetrieb betrieben werden, wird als Referenzelektrodenmaterial bisher im wesentlichen Silber/Silberchlorid mit den oben beschriebenen Problemen verwendet.

Aufgabe der Erfindung war es, voltammetrische Referenzelektroden bereitzustellen, die die oben genannten Nachteile vermeiden und wenig störanfällige, richtige und reproduzierbare Messungen erlauben. Insbesondere sollen diese Elektroden auch kostengünstig herstellbar und miniaturisierbar sein.

Die Aufgabe der Erfindung wird gemäß den Ansprüchen gelöst. Die Unteransprüche stellen bevorzugte Ausführungsvarianten dar.

Es wurde überraschenderweise gefunden, daß sich für eine offene Referenzelektrode einer voltammetrischen Meßkette, an deren Arbeitselektrode eine oxidative Detektion redoxaktiver Analyte erfolgt, als potentialbestimmendes Elektrodenmaterial, das auf einen planaren Träger aufgebracht ist, metallhaltige Phthalocyanine oder Metalloporphyrine, die jeweils homogen mit einem inerten leitfähigen Material oder mit einem inerten leitfähigen Material und einem härtbaren Bindemittel vermischt vorliegen, besonders geeignet sind. Als inertes leitfähiges Material werden Kohlenstoff, z. B. Graphit oder pyrolytische Kohlenstoffe wie Ruß oder zu Pulver vermahlener Glaskohlenstoff, oder Edelmetallpulver aus Gold, Platin oder Palladium verwendet, vorzugsweise Kohlenstoff oder ein Gemisch verschiedener Kohlenstoffarten. Als Bindemittel können Polymere, vorzugsweise Polyvinylchlorid, Siliconharz, Epoxidharz, Phenolharz, Acrylat oder Mischungen davon dienen.

Die Referenzelektrode besteht in einer bevorzugten Ausführungsform der Erfindung aus einem planaren Träger, auf den eine Schicht aufgebracht ist, die homogen verteilt ein pulverförmiges Phthalocyanin, eine Kohlenstoffart oder ein Gemisch unterschiedlicher Kohlenstoffarten und das polymere Bindemittel enthält. Insbesondere die Verwendung von metallhaltigen Phthalocyaninen als potentialbestimmendes Referenzelektrodenmaterial, die vorzugsweise Eisen-, Mangan-, Cobalt-, Nickel- oder Kupferatome enthalten, vermindert die erforderliche Polarisationsspannung zum Erreichen des Diffusionsgrenzstromes für die Oxidation eines Analyten um ca. 150 mv bis 200 mv gegenüber einem geschlossenen Silber/Silberchlorid-Referenzelektrodensystem.

Als Trägermaterialien kommen für die erfindungsgemäßen Sensoren Keramikmaterialien, z.B. solche auf der Grundlage von Al₂O₃ oder SiO₂ oder Kunststoffe wie Polyamid, PEEK, Polypropylen, faserverstärkte Epoxid- und Phenolharze oder Polycarbonat in Frage, besonders bevorzugt wird Polycarbonat als Trägermaterial eingesetzt.

Die Herstellung der offenen Referenzelektrode zur Anwendung in voltammetrischen Meßketten für die oxidative Detektion erfolgt so, daß zunächst das metallhaltige Phthalocyanin oder Metallophorphyrin mit dem inerten Material oder mit dem inerten Material und dem härtbaren Bindemittel homogen gemischt wird, das Gemisch auf den Träger aufgetragen und ausgehärtet wird.
Eine andere Herstellungsmöglichkeit bietet die Vakuumbedampfung, wie aus der Dünnschichttechnik bekannt. Dabei werden nacheinander oder im Gemisch das inerte elektrisch leitfähige Material und das Phthalocyanin oder Metalloporphyrin, gegebenenfalls unter Nutzung einer entsprechenden Maske, auf das Trägermaterial aufgebracht.

Es hat sich gezeigt, daß das erfindungsgemäße Elektrodenmaterial gegenüber einem offen verwendeten Silber/Silberchloridsystem wesentlich weniger empfindlich gegenüber Änderungen der Ionenkonzentration und der Zusammensetzung der Ionen im Meßmedium ist sowie eine geringere Empfindlichkeit gegenüber Strömungsänderungen des Meßmediums zeigt. Damit wird die Messung weniger interferenzanfällig bzw. richtiger und reproduzierbarer (vgl. auch Tabelle 1 in Beispiel 2).

Es hat sich überraschenderweise auch gezeigt, daß durch die Nutzung von Metallen der vierten Periode, insbesondere Kupfer, die mit einem Salz einer anorganischen Säure überzogen werden, vorzugsweise aber halogeniert werden, ein Referenzelektrodenmaterial zur Verfügung steht, das sich speziell für offene Referenzelektroden in einer voltammetrischen Meßkette eignet, deren Arbeitselektrode reduktiv polarisiert wird. Denn die erforderliche Polarisationsspannung zur Erreichung des Diffusionsgrenzstromes für die Reduktion eines oxidiert vorliegenden Analyten ist im Betrag nicht größer als die mit einer externen geschlossenen Silber/Silberchlorid-Referenzelektrode. Bei Verwendung von Phosphatpuffer als Modellmeßlösung ist die erforderliche Polarisationsspannung im Betrag um 50 mV geringer als mit der externen Silber/ Silberchlorid-Referenzelektrode. Die Verwendung eines der Metalle der vierten Periode, insbesondere aber Kupfer, ist insofern auch vorteilhaft, da es ein in der Elektronik typischerweise eingesetztes Metall ist, für dessen Verarbeitung sowohl etablierte dünnschichttechnologische und galvanische Verfahren zur Verfügung stehen als auch kupferpartikelhaltige Dickschichtleitpasten technologischer Standard sind. Die Halogenierung, vorzugsweise die Chlorierung eines der Metalle der vierten Periode, insbesondere Kupfer, kann sowohl chemisch als auch galvanisch erfolgen.

Die planaren offenen Referenzelektroden für die reduktive Detektion können als potentialbestimmendes Elektrodenmaterial auch das Metall und Metallsalz in homogener Mischung mit einem inerten leitfähigen Material und einem härtbaren Bindemittel aufweisen. Als inertes leitfähiges Material kann Kohlenstoff, z.B. Graphit, pyrolytische Kohlenstoffe wie Ruß oder zu Pulver vermahlener Glaskohlenstoff oder Edelmetallpulver aus Gold, Platin oder Palladium eingesetzt werden, vorzugsweise kommt Kohlenstoff oder ein Gemisch verschiedener Kohlenstoffarten zur Anwendung. Als härtbares Bindemittel kommt vorzugsweise ein Polymer in Frage, ganz besonders bevorzugt Polyvinylchlorid, Siliconharz, Epoxidharz, Phenolharz, Acrylat oder Mischungen dieser.

Die erfindungsgemäß offenen Referenzelektroden für die reduktive Detektion, deren potentialbestimmendes Elektrodenmaterial lediglich aus einem Metall der vierten Periode und aus einem Salz dieses Metalls besteht, können hergestellt werden, indem das Metall in bekannter Art und Weise beispielsweise durch die in der Dünnschichttechnik übliche Kathodenzerstäubung oder Vakuumbedampfung auf den planaren Träger aufgebracht wird oder auf dem planaren Träger elektrochemisch abgeschieden wird und nachfolgend chemisch oder elektrolytisch oberflächlich in ein Metallsalz überführt wird.

Die erfindungsgemäßen Referenzelektroden, die als potentialbestimmendes Elektrodenmaterial eine homogene Mischung aus Metall, Metallsalz, inertem Material und härtbarem Bindemittel beinhalten, werden hergestellt aus homogenen Mischungen von Metallpartikeln der vierten Periode mit ihren Salzen (vorzugsweise Halogensalzen, die zuvor naßchemisch erzeugt wurden), mit dem inerten, elektrisch leitfähigen Material (wie z. B. Kohlenstoff oder einer Mischung verschiedener Kohlenstoffe) und mit dem härtbaren Bindemittel. Diese Mischungen werden auf die planaren Träger aufgebracht und ausgehärtet. Als Trägermaterialien können Siliziumsubstrate, Keramikmaterialien, z. B. solche auf der Grundlage von Al₂O₃, oder Kunststoffe wie Polyamid, PEEK, Polypropylen, faserverstärkte Epoxid- und Phenolharze oder Polycarbonat dienen, vorzugsweise wird Polycarbonat eingesetzt

So können zur Herstellung von erfindungsgemäßen Elektroden mit Kupfer und Kupfersalz als potentialbestimmendem Elektrodenmaterial beispielsweise kommerziell erhältliche Kupferleitpasten, die die genannten Verbindungen bereits beinhalten, eingesetzt werden.

Die erfindungsgemäßen offenen Referenzlektroden sowohl für oxidative als auch reduktive Detektionszwecke planar strukturierter Meßketten ermöglichen neben einer wenig störanfälligen Messung eine kostengünstige und reproduzierbare Herstellung mittels etablierter Massenfertigungstechnologien aus der Mikroelektronik einschließlich einer guten Miniaturisierbarkeit.

Gegenstand der Erfindung ist neben den Referenzelektroden und deren Verfahren zur Herstellung auch die Verwendung von metallhaltigen Phthalocyaninen oder Metallo-Porphyrinen als potentialbestimmendes Elektrodenmaterial für offene Referenzelektroden zur Anwendung in voltammetrischen Meßketten für die oxidative Detektion sowie die Verwendung eines Metalles der vierten Periode und einem Salz dieses Metalles als potentialbestimmendes Elektrodenmaterial für offene Referenzelektroden zur Anwendung in voltammetrischen Meßketten für die reduktive Detektion.

### Beispiel 1:

### Sensor mit erfindungsgemäßer Referenzelektrode für die oxidative Detektion und Vergleichssensor

Mittels einer polymeren Silberleitpaste (ESL, GB: D-1120-PG) und einer polymeren Isolationspaste (ESL 242 SB fine line) werden auf ein Polycarbonatträgermaterial von 60 mm x 8 mm nacheinander drei Silberkontaktbahnen und eine Isolationsschicht derart aufgetragen, daß auf der einen Seite ein Messfenster und auf der anderen Seite drei Anschlußflächen zur elektrischen Kontaktierung erzeugt werden. In das Messfenster münden die Kontaktbahnen mit jeweils 0,2 mm² Fläche. Nach der Aushärtung der aufgetragenen Pastenschichten bei 120 °C über 24 h wird durch einen Mikrodispenser auf die Flächen der Kontaktbahnen im Messfenster jeweils kreisförmig Platinleitpaste (IBH Klingenberg) mit einem Durchmesser von 0,5 mm als Arbeits- und Gegenelektrode aufgebracht und ausgehärtet.

Für die Referenzelektrode wird Kobaltphthalocyanin (Sigma, Deisenhofen, BRD), Kohlenstoff und Epoxidharz im Verhältnis 20:40:40 gemischt und auf die dritte Kontaktfläche im Messfenster aufgetragen und bei 90°C ausgehärtet. Die Fläche der Referenzelektrode beträgt 0,7 mm².

Für Vergleichszwecke wurde ein zweiter Sensor hergestellt, der jedoch als Referenzelektrode eine Silberpastenschicht (ESL, GB: D-1120-PG) erhielt. Zur Erzeugung einer Silberchloridschicht wurde die Referenzelektrode bei einer anodischen Spannung von +1 V vs. externe Ag/AgCl-Referenzelektrode (Metrohm, Filderstadt, BRD) über 1 min in einer 0,1 M HCl Lösung betrieben.

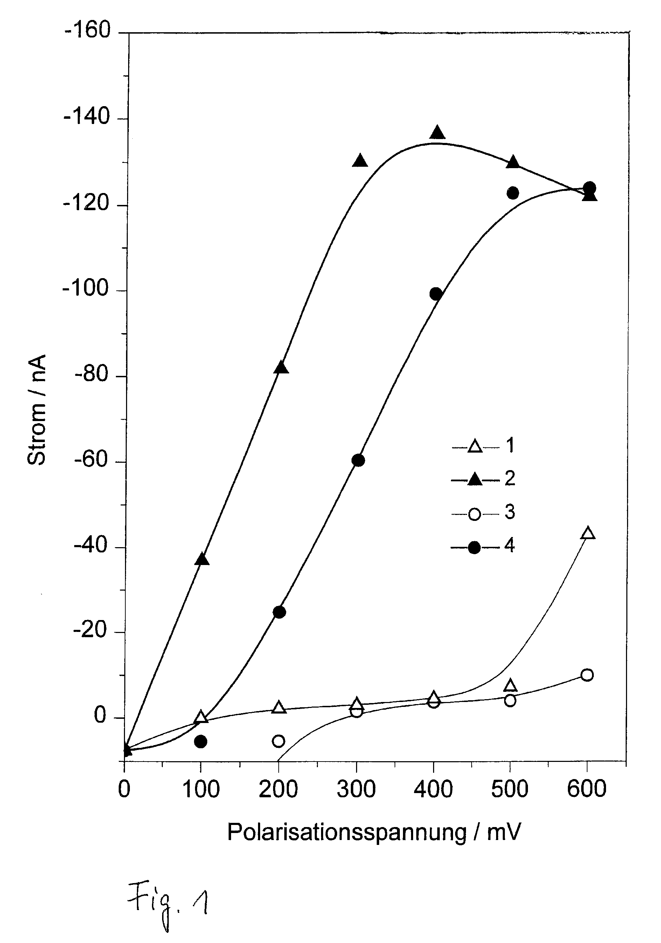

Fig. 1 zeigt, daß das Diffusionsgrenzstromplateau für die Wasserstoffperoxidoxidation für den Sensor mit dem Kobalt-Phthalocyanin/ Kohlenstoff-Referenzelektrodensystem bei einer Polarisationsspannung zwischen +300 mv und +400 mv erreicht wird, während das Diffusionsgrenzstromplateau des Sensors mit Silber/Silberchlorid als Referenzelektrodensystem zwischen 500 und 600 mv erreicht wird. Die Grundströme wurden in einer gerührten Pufferlösung pH 6,8 und die Diffusionsgrenzströme für die Oxidation von 0,1 mM Wasserstoffperoxid in einer gerührten Pufferlösung pH 6,8 erhalten.

In Fig. 1 bedeutet
1 Grundstrom des Sensors mit Kobalt-Phthalocyanin/ Kohlenstoff- Referenzelektrodenmaterial in Abhängigkeit von der angelegten Polarisationsspannung
2 Diffusionsgrenzstrom des Sensors mit Kobalt-Phthalocyanin/Kohlenstoff- Referenzelektrodenmaterial in Abhängigkeit von der angelegten Polarisationsspannung
3 Grundstrom des Sensors mit Silber/Silberchlorid-Referenzelektrodenmaterial in Abhängigkeit von der angelegten Polarisationsspannung
4 Diffusionsgrenzstrom des Sensors mit Silber/Silberchlorid-Referenzelektrodenmaterial in Abhängigkeit von der angelegten Polarisationsspannung.

### Beispiel 2:

### Interferenzuntersuchungen des erfindungsgemäßen Sensors und des Vergleichssensors aus Beispiel 1

Es wurden Interferenzuntersuchungen des erfindungsgemäßen Sensors und des Vergleichssensors durchgeführt. Die Ergebnisse sind in Tab. 1 dargestellt.

Aus dem Vergleich der Interferenzuntersuchungen des Sensors mit offenem Kobaltphthalocyanin/Kohlenstoff-Referenzsystem (CoPc/C) und des Sensors mit offenem Silber/Silberchlorid-Referenzsystem (Ag/AgCl) wird deutlich, dass bei der entsprechenden Polarisationsspannung, die für das Erreichen des jeweiligen Diffusionsgrenzstroms der Wasserstoffperoxidoxidation der Sensoren mit den unterschiedlichen Referenzelektroden erforderlich ist, die Interferenzströme des Sensors mit Kobaltphthalocyanin/Kohlenstoff-Referenz-elektrode deutlich geringer sind bzw. sein Interferenz/Signalstromverhältnis günstiger ist als die bzw. das des Sensors mit Silber/Silberchlorid-Referenzelektrode.

**Tabelle 1**

| **Referenzsystem** | **Ag/AgCl** | **CoPc/C** |
|---|---|---|
| Polarisationsspannung (Diffusionsgrenzstrombereich) | 500 mV | 300 mV |
| Grundstrom / nA | -4,3 | -2,0 |
| H₂O₂-Signalstrom ( für 0,2 mM)/ nA | -122,9 | -130,0 |
| Ascorbat-Interferenzstrom (für 0,1 mM) / nA | -57,7 | -29,0 |
| Paracetamol-Interferenzstrom (für 0,1 mM) / nA | -51,5 | -43,7 |
| Harnsäure-Interferenzstrom (für 0,1 mM) 1 nA | -42,6 | -28,6 |
| Interferenz-/Signalstrom-Verhältnis: 0,1 mM H₂O₂/0,1 mM Ascorbat | 0,47 | 0,11 |
| Interferenz-/Signalstrom-Verhältnis: 0,1 mM H₂O₂/0,1 mM Paracetamol | 0,42 | 0,34 |
| Interferenz-/Signalstromverhältnis: 0,1 mM H₂O₂/0,1 mM Harnsäure | 0,35 | 0,22 |

### Beipiel 3:

### Sensor mit erfindungsgemäßer Referenzelektrode für die reduktive Detektion und Vergleichssensor

Die Herstellung des Grundsensors einschließlich der Aufbringung von Kontaktbahnen und Isolationsschicht erfolgte wie in Beispiel 1 beschrieben. Durch einen Mikrodispenser wird auf zwei der Kontaktbahnen im Messfenster kreisförmig Kohlenstoffpaste (P1, SensLab GmbH, Leipzig) mit einem Durchmesser von 0,5 mm als Arbeits- und Gegenelektrode aufgebracht und ausgehärtet. Für die Referenzelektrode wird Kupferleitpaste (CB 200, Du Pont, GB) auf die dritte Kontaktfläche im Messfenster aufgetragen und bei 110°C über 16 Stunden ausgehärtet. Die Fläche der Referenzelektrode beträgt 0,7 mm².
Mit der Inbetriebnahme des Sensors in Phopsphatpuffer wird durch die Nutzung der Kupferreferenzelektorde als Anode sofort ein dünne Kupferphosphatschicht erzeugt. Deshalb ist eine vorherige Behandlung zur Erzeugung eines Kupfersalzes nicht unbedingt notwendig. Falls diese Phosphatierung bereits bei der Herstellung erfolgen soll, wird die Referenzelektrode anodisch bei einer festen Polarisationsspannung zwischen -200 mV und -800 mV vs. Ag/AgCl für ca. 30 sec bis 60 sec in 0,1 M Phosphatpuffer pH 6 betrieben ( 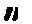 galvanisiert")

Für Vergleichszwecke wurde ein zweiter Sensor hergestellt, der jedoch als Referenzelektrode eine Silberpastenschicht (ESL, GB: D-1120-PG) erhielt. Zur Erzeugung einer Silberchloridschicht wurde die Referenzelektrode bei einer anodischen Spannung von +1 V vs. externe Ag/AgCl-Referenzelektrode (Metrohm, Filderstadt, BRD) über 1 min in einer 0,1 M HCl Lösung betrieben.

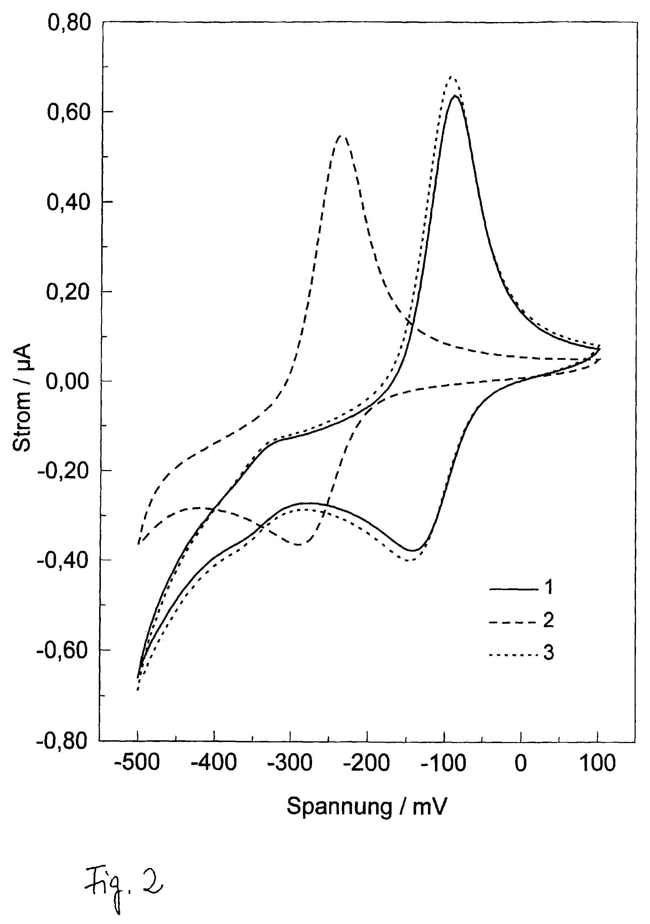

Fig. 2 zeigt, daß das offene Silber/Silberchlorid-Referenzsystem gegenüber der geschlossenen Silber/ Silberchlorid-Referenzelektrode, die über eine Salzbrücke und ein Diaphragma mit der Meßlösung in Verbindung steht, zu einer Verschiebung des formalen Potentials des Redoxmediators um ca. 150 mV in negativer Richtung führt. Das formale Redoxpotential des Redoxmediators bleibt bei Verwendung des Cu-Referenzsystems im Vergleich zur externen Referenzelektrode nahezu unverändert, was insbesondere für die kathodische Detektion elektroaktiver Stoffe bzw. enzymatischer Reaktionsprodukte von Bedeutung ist.

In Fig. 2 bedeutet:
1 Zyklisches Voltammogramm von 0,1 mM 1-Methoxy-Phenazinium-methosulfat in Phosphatpuffer pH 6,8 bei einer Scanrate von 50 mV / sec an einer Kohlenstoffarbeitselektrode eines Sensors, bei dem als Referenzsystem Kupfer dient
2 Zyklisches Voltammogramm von 0,1 mM 1-Methoxy-Phenazinium-methosulfat in Phosphatpuffer pH 6,8 bei einer Scanrate von 50 mV / sec an einer Kohlenstoffarbeitselektrode eines Sensors, bei dem als Referenzsystem Silber/Silberchlorid dient
3 Zyklisches Voltammogramm von 0,1 mM 1-Methoxy-Phenazinium-methosulfat in Phosphatpuffer pH 6,8 bei einer Scanrate von 50 mV / sec an einer Kohlenstoffarbeitselektrode eines Sensors, bei dem als Referenzsystem eine externe Silber/Silberchlorid-Referenzelektrode (Metrohm, Filderstadt) verwendet wurde.

## Patentansprüche

1. Offene Referenzelektrode zur Anwendung in voltammetrischen Meßketten für die oxidative Detektion bestehend aus einem planaren Träger, auf den eine Schicht aufgebracht ist, die das potentialbestimmende Elektrodenmaterial umfaßt,
dadurch gekennzeichnet, daß
das potentialbestimmende Elektrodenmaterial ein metallhaltiges Phthalocyanin oder ein Metallo-Porphyrin ist.

2. Referenzelektrode nach Anspruch 1,
dadurch gekennzeichnet, daß
das Phthalocyanin Eisen-, Mangan-, Cobalt-, Nickel-oder Kupferphthalocyanin ist.

3. Referenzelektrode nach Anspruch 1 oder 2,
dadurch gekennzeichnet, daß
die das potentialbestimmende Elektrodenmaterial umfassende Schicht das metallhaltige Phthalocyanin oder Metallo-Porphyrin in homogener Mischung mit einem inerten leitfähigen Material oder mit einem inerten leitfähigen Material und einem Bindemittel beinhaltet.

4. Referenzelektrode nach Anspruch 3,
dadurch gekennzeichnet, daß
das inerte elektrisch leitfähige Material Kohlenstoff oder ein Gemisch verschiedener Kohlenstoffarten ist.

5. Referenzelektrode nach Anspruch 3 oder 4,
dadurch gekennzeichnet, daß
das Bindemittel ein Polymer ist.

6. Verfahren zur Herstellung einer planaren offenen Referenzelektrode gemäß der Ansprüche 1 bis 5,
dadurch gekennzeichnet, daß
eine homogene Mischung aus dem metallhaltigen Phthalocyanin oder Metallo-Porphyrin mit dem inerten leitfähigen Material oder mit einem inerten leitfähigen Material und dem härtbaren Bindemittel hergestellt, auf den planaren Träger aufgetragen und ausgehärtet wird.

7. Verwendung von metallhaltigen Phthalocyaninen oder Metallo-Porphyrinen als potentialbestimmendes Elektrodenmaterial für offene Referenzelektroden zur Anwendung in voltammetrischen Meßketten für die oxidative Detektion.

8. Offene Referenzelektrode zur Anwendung in voltammetrischen Meßketten für die reduktive Detektion bestehend aus einem planaren Träger, auf den eine Schicht aufgebracht ist, die das potentialbestimmende Elektrodenmaterial umfaßt,
dadurch gekennzeichnet, daß
das potentialbestimmende Elektrodenmaterial aus einem Metall der vierten Periode und einem Salz dieses Metalls besteht.

9. Referenzelektrode gemäß Anspruch 8,
dadurch gekennzeichnet, daß
das potentialbestimmende Elektrodenmaterial aus Kupfer und einem Kupfersalz besteht.

10. Referenzelektrode gemäß Anspruch 8 oder 9,
dadurch gekennzeichnet, daß
das Metallsalz ein Salz einer anorganischen Säure, vorzugsweise ein Halogenid, ist.

11. Referenzelektrode gemäß einem der Ansprüche 8 bis 10,
dadurch gekennzeichnet, daß
die das potentialbestimmende Elektrodenmaterial umfassende Schicht das Metall und das Metallsalz in homogener Mischung mit einem inerten elektrisch leitfähigen Material und einem Bindemittel beinhaltet.

12. Referenzelektrode gemäß Anspruch 11,
dadurch gekennzeichnet, daß
das inerte, elektrisch leitfähige Material Kohlenstoff oder ein Gemisch verschiedener Kohlenstoffarten ist.

13. Referenzelektrode gemäß Anspruch 11,
dadurch gekennzeichnet, daß
das Bindemittel ein Polymer ist.

14. Referenzelektrode gemäß einem der Ansprüch 8 bis 10,
dadurch gekennzeichnet, daß
die das potentialbestimmende Elektrodenmaterial umfassende Schicht aus einer Metallschicht besteht, deren Oberfläche von einer Metallsalzschicht überzogen ist.

15. Verfahren zur Herstellung einer planaren offenen Referenzelektrode gemäß der Ansprüche 8 bis 13,
dadurch gekennzeichnet, daß
eine homogene Mischung aus den Metallpartikeln, dem Metallsalz, dem inerten elektrisch leitfähigen Material und dem härtbaren Bindemittel auf den planaren Träger aufgetragen und ausgehärtet wird.

16. Verfahren zur Herstellung einer planaren offenen Referenzelektrode gemäß Anspruch 14,
dadurch gekennzeichnet, daß
die das potentialbestimmende Elektrodenmaterial umfassende Schicht auf dem planaren Träger durch Vakuumbedampfung oder Kathodenzerstäubung des Metalls oder galvanische Abscheidung des Metalls und nachfolgende chemische oder galvanische oberflächliche Umwandlung des Metalls in ein Metallsalz hergestellt wird.

17. Verwendung eines Metalles der vierten Periode und einem Salz dieses Metalles als potentialbestimmendes Elektrodenmaterial für offene Referenzelektroden zur Anwendung in voltammetrischen Meßketten für die reduktive Detektion.
